# EUROPÄISCHE PATENTSCHRIFT

(11) **EP 2 374 368 B1**
(45) Veröffentlichungstag und Bekanntmachung des Hinweises auf die Patenterteilung: **19.12.2012**
(21) Anmeldenummer: 11162143.9
(22) Anmeldetag: 12.04.2011
(51) Int. Cl.: A47B 9/00, A47C 20/04

(54) **Verstellbares Möbelstück mit einer Schaltungsanordnung zum Einschalten einer elektrisch betätigbaren Verstelleinrichtung**
Adjustable item of furniture with a switch assembly for activating an electrically actuated adjustment device
Pièce de meuble réglable dotée d'un agencement de commutation pour la commutation d'un dispositif de réglage actionné électriquement

(30) Priorität: 12.04.2010 DE 102010016406
(43) Veröffentlichungstag der Anmeldung: 12.10.2011
(73) Patentinhaber: VIBRADORM GmbH, 64713 Michelstadt (DE)
(72) Erfinder: Günther, Christoph, 64711 Erbach (DE)
(74) Vertreter: Katscher Habermann Patentanwälte

(56) Entgegenhaltungen:
- DE-A1-102004 021 169
- DE-A1-102006 038 558
- DE-U1- 29 816 022
- DE-U1-202007 009 919

## Beschreibung

Ein verstellbares Möbelstück ist aus DE 10 2006 038 558 A1 bekannt.

Die Erfindung betrifft ein verstellbares Möbelstück mit einer Schaltungsanordnung zum Einschalten einer elektrisch betätigbaren Verstelleinrichtung, die über mindestens einen steuerbaren Schalter mit Anschlüssen für ein elektrisches Versorgungsnetz verbindbar ist, wobei eine unter Umgehung des mindestens einen steuerbaren Schalters mit den Anschlüssen verbundene Hilfsspannungsquelle vorgesehen ist, welche Energie zum Betätigen des mindestens einen steuerbaren Schalters liefert.

Zur Verstellung beispielsweise der Höhe von Tischen oder Betten, der Neigung des Kopfteils eines Lattenrosts oder einer Sitzposition in einem Sessel können elektrisch betätigbare Verstelleinrichtungen eingesetzt werden. Die Betätigung der Verstelleinrichtungen erfolgt dabei häufig elektromechanisch, beispielsweise mit Hilfe von Elektromotoren als elektrische Antriebsvorrichtungen.

Unter anderem aus Sicherheitsgründen werden die zur Betätigung der Verstelleinrichtung benötigten elektrischen Antriebsvorrichtungen üblicherweise mit Hilfe eines Schalters galvanisch von dem elektrischen Netz getrennt. Um den Bedienkomfort zu erhöhen kann vorgesehen sein, dass der Schalter fernsteuerbar ist. Durch eine ferngesteuerte

Betätigung des steuerbaren Schalters kann die elektrisch betätigbare Verstelleinrichtung in einen

Bereitschaftszustand versetzt werden, solange keine Verstellenergie benötigt wird. Um die Verstelleinrichtungen beispielsweise mit Hilfe einer Fernbedienung aus diesem Bereitschaftszustand in einen Betriebszustand zu versetzen, ist eine Hilfsspannungsquelle erforderlich.

Als Hilfsspannungsquelle kommen häufig Batterien zum Einsatz. Der Einsatz von Batterien hat allerdings den Nachteil, dass diese regelmäßig ausgewechselt werden müssen. Der notwendige Batteriewechsel wird von den Nutzern häufig als störend empfunden. Zudem muss die Notwendigkeit des Wechsels dem Nutzer deutlich beispielsweise mit Hilfe eines Warnsignals angezeigt werden, um die permanente Bereitschaft des Möbelstücks sicherzustellen. Dies wird von den Nutzern ebenfalls als störend empfunden. Damit auch ein nicht technisch geschulter Nutzer des Möbelstücks den Batteriewechsel vornehmen kann, muss ein entsprechendes Batteriefach einfach zugänglich sein. Dies muss bei der Konstruktion beachtet werden, was die Kosten des Möbelstücks erhöht. Zudem kann häufig nicht vermieden werden, dass der optische Gesamteindruck des Möbelstücks durch das leicht zugängliche Batteriefach gestört wird.

Daher werden auch Hilfsspannungsquellen eingesetzt, die permanent von dem Versorgungsnetz mit elektrischer Energie versorgt werden. Diese Hilfsspannungsquellen verbrauchen im Verhältnis zur Leistungsaufnahme während eines Verstellvorgangs viel Energie. Die Leistungsaufnahme solcher Geräte, die für verstellbare Möbelstücke geeignet sind und üblicherweise verwendet werden, kann im Bereitschaftszustand bis zu 6 Watt beziehungsweise 8 Watt betragen. Dieses Verhältnis ist insbesondere bei verstellbaren Möbeln ungünstig, da der Betrieb zum Verstellen oft nur wenige Sekunden dauert.

Aus anderen Bereichen wie beispielsweise der Unterhaltungselektronik bekannte Stand-by-Schaltungen können nicht ohne weiteres in verstellbaren Möbelstücken eingesetzt werden, da bei verstellbaren Möbelstücken besondere Anforderungen hinsichtlich der elektrischen Komponenten bestehen und strenge Sicherheitsvorgaben erfüllt werden müssen.

Das wachsende Umweltbewusstsein und steigende Energiepreise erfordern möglichst geringe Leistungsaufnahmen auch für verstellbare Möbelstücke im Bereitschaftszustand.

Es ist daher Aufgabe der Erfindung, bekannte verstellbare Möbelstücke so weiterzuentwickeln, dass die Leistungsaufnahme der elektrisch betätigbaren Verstelleinrichtung im Bereitschaftszustand möglichst gering ist.

Diese Aufgabe wird erfindungsgemäß dadurch gelöst, dass die Hilfsspannungsquelle von einem Kondensator und einem spannungsbegrenzenden Element gebildet ist, die über eine Gleichrichterschaltung und über mindestens einen Widerstand mit den Anschlüssen verbunden sind. Dabei kann die Schaltungsanordnung auch getrennt von der elektrisch betätigbaren Verstelleinrichtung an dem Möbelstück angeordnet werden.

Als steuerbare Schalter können verschiedene Elemente verwendet werden, beispielsweise Halbleiterschalter wie Thyristoren oder Transistoren. Gemäß einer bevorzugten Ausführungsform ist jedoch ein Relais vorgesehen.

Bei elektrisch verstellbaren Möbeln wird aus Sicherheitsgründen eine galvanische Trennung vom Versorgungsnetz gefordert. Bei der Hilfsspannungsquelle gemäß der Erfindung wird jedoch auf eine solche verzichtet. Geltende Sicherheitsanforderungen werden trotzdem berücksichtigt, wenn gemäß einer Weiterbildung der Erfindung der Kondensator über je einen Widerstand mit den Anschlüssen verbunden ist. Dabei ist vorzugsweise vorgesehen, dass in Reihe zu den Widerständen je eine Gleichrichterdiode geschaltet ist. Die Widerstände können bei der Erfindung nämlich derart groß ausgeführt werden, dass sie nur einen sehr kleinen Strom zulassen, beispielsweise einige pA.

Die elektrische Betätigung der Verstelleinrichtung kann auf unterschiedliche Weise erfolgen. Vorzugsweise ist jedoch vorgesehen, dass die Verstelleinrichtung über einen Elektromotor betätigbar ist.

Die geringe Leistungsaufnahme wird bei der Erfindung dadurch bewirkt, dass die Hilfsspannungsquelle nicht ständig eine zum Betätigen des steuerbaren Schalters erforderliche Leistung entnimmt. Dazu ist gemäß einer vorteilhaften Ausführungsform der Erfindung vorgesehen, dass der über den mindestens einen Widerstand fließende Strom zum Erhalt der Ladung des Kondensators auf eine vom Spannungsbegrenzenden Element vorgegebene Spannung und zum Betrieb eines angeschlossenen Prozessors ausreicht und dass bei einem über den Prozessor empfangenen Einschaltbefehl die Energie zum Betätigen des mindestens einen steuerbaren Schalters aus dem Kondensator entnehmbar ist. Durch eine geeignete Ausgestaltung kann erreicht werden, dass die Leistungsaufnahme der Schaltungsanordnung im Bereitschaftszustand weniger als 0,5 Watt, vorzugsweise weniger als 0,1 Watt beträgt.

Vorteilhafterweise kann die Erfindung derart ausgeführt sein, dass Mittel zur Ableitung eines Stroms zum Halten des mindestens einen steuerbaren Schalters aus der durch den mindestens einen steuerbaren Schalter eingeschalteten Spannung nach dem Einschalten vorgesehen sind.

Weitere vorteilhafte Ausgestaltungen bestehen darin, dass der elektrisch betätigbaren Verstelleinrichtung über eine Einrichtung zur galvanischen Trennung an Schaltkontakte des Relais angeschlossen ist, dass die Einrichtung zur galvanischen Trennung ein Transformator ist, dass die Einrichtung zur galvanischen Trennung ein Schaltwandler ist und/oder dass der Einrichtung zur galvanischen Trennung eine weitere Gleichrichterschaltung nachgeschaltet ist.

Bei einer besonders vorteilhaften Ausgestaltung des Erfindungsgedankens ist vorgesehen, dass es sich bei dem verstellbaren Möbelstück um einen höhenverstellbaren Tisch handelt.

Die Erfindung lässt zahlreiche Ausführungsbeispiele zu. Zwei Ausführungsbeispiele sind schematisch in der Zeichnung dargestellt und im Folgenden beschrieben.

Es zeigt:
Figur 1 eine schematische Darstellung einer Schaltungsanordnung zum Betrieb einer elektromotorisch betätigbaren Verstelleinrichtung,
Figur 2 eine schematische Darstellung eines höhenverstellbaren Tischs.

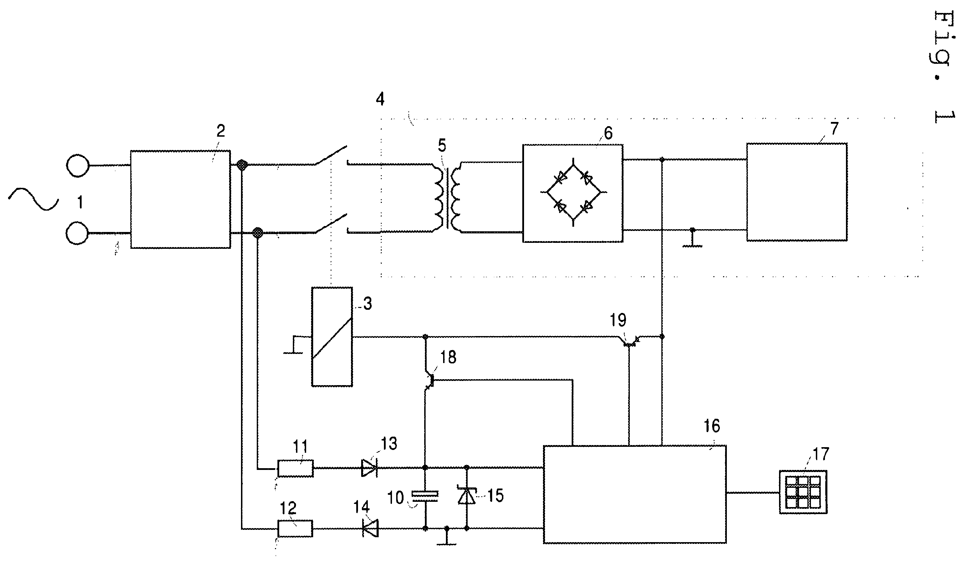

Die in Figur 1 schematisch dargestellte Schaltungsanordnung wird über einen Netzstecker 1 (Anschlüsse) und über ein EMV-Filter 2 mit dem Versorgungsnetz verbunden. Ein Leistungspfad 4 kann über Schaltkontakte eines Relais 3 ein- bzw. ausgeschaltet werden. Der Leistungspfad 4 enthält einen Transformator 5 und eine Gleichrichterschaltung 6. Anstelle des Transformators 5 kann auch ein Schaltwandler verwendet werden. Bei verstellbaren Möbeln müssen durch den Transformator 5 und die Gleichrichterschaltung 6 verhältnismäßig hohe Leistungen von beispielsweise 300W bis 400W für die in der Zeichnung lediglich angedeutete elektromotorisch betätigbare Verstelleinrichtung 7 zur Verfügung gestellt werden. Auch bei abgeschalteten Motoren beträgt die Leistungsaufnahme eines Transformators dann mehrere Watt. Ein Schaltnetzteil nach heutigem Stand der Technik kommt dabei auf etwa 0,5W bis 1W. Deshalb ist die Verwendung einer Hilfsspannungsquelle und eines Relais vor dem Leistungspfad energiesparend.

Bei dem dargestellten Ausführungsbeispiel besteht die Hilfsspannungsquelle aus einem Kondensator 10, dessen beide Anschlüsse über je eine Reihenschaltung aus einem Widerstand 11, 12 und einer Gleichrichterdiode 13, 14 mit dem Versorgungsnetz verbunden sind. Dadurch wird der Kondensator geladen, wobei die Ladespannung durch eine Z-Diode 15 auf einen für die nachfolgenden elektronischen Schaltungen geeigneten Wert, beispielsweise 12V, begrenzt wird. Ein Prozessor 16 wird über die Hilfsspannungsquelle 11 bis 15 versorgt.

Empfängt der Prozessor 16, beispielsweise von einer Fernbedienung 17, einen Befehl zum Einschalten des Leistungspfades 4, betätigt der Prozessor 16 über einen Transistor 18 das Relais 3. Nach dem Einschalten des Leistungspfades 4 erhält das Relais 3 über einen weiteren Transistor 19 Haltestrom. Der Transistor 18 wird dann wieder gesperrt.

Üblicherweise dient der Prozessor 16 auch zur Steuerung einzelner Funktionen der Verstelleinrichtung 7, was nicht näher erläutert wird, da dies zum Verständnis der Erfindung nicht erforderlich ist. Wird der Leistungspfad 4 nicht mehr benötigt, beispielsweise nach Ablauf einer vorgegebenen Zeit nach einem Verstellvorgang, trennt der Prozessor 16 über den Transistor 19 das Relais 3 vom Leistungspfad 4, so dass es abfällt und den Leistungspfad 4 spannungslos schaltet.

Eine vorteilhafte Dimensionierung einzelner Elemente des Ausführungsbeispiels besteht im Folgenden:

| | |
|---|---|
| Widerstände 11, 12 | 1 MOhm |
| Kondensator 10 | 1000 µF |

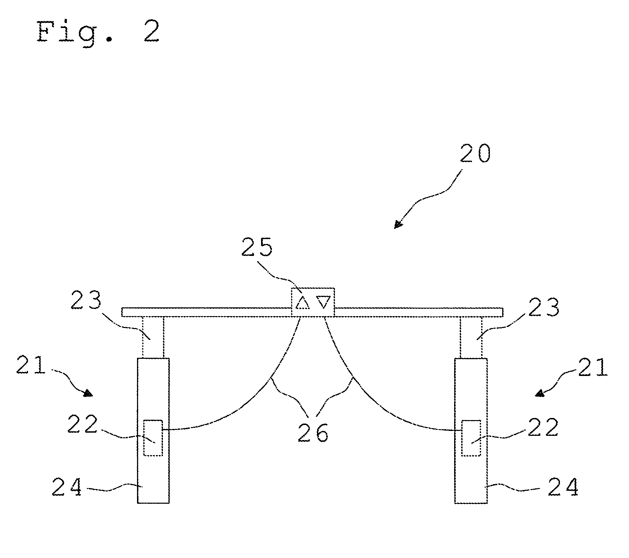

In Figur 2 ist schematisch ein höhenverstellbarer Tisch 20 dargestellt. Eine Höhenverstellung des Tischs erfolgt mittels nicht dargestellter in den Tischbeinen 21 angeordneter Verstellvorrichtung, die über Elektromotoren 22 angetrieben werden. Mit Hilfe der elektromotorisch betätigbaren Verstelleinrichtung kann ein erstes Tischbeinelement 23 relativ zu einem zweiten Tischbeinelement 24 verlagert werden. Die Höhe des Tischs kann von einem Nutzer mit Hilfe des Bedienelements 25 vorgegeben werden, das auch die Schaltungsanordnung beinhaltet, mit der das verstellbare Möbelstück von einem Bereitschaftszustand in einen Betriebszustand versetzt werden kann. Die Elektromotoren 22 werden über Kabel 26 ausgehend von der Schaltungsanordnung mit elektrischer Energie versorgt.

## Patentansprüche

1. Verstellbares Möbelstück mit einer Schaltungsanordnung zum Einschalten einer elektrisch betätigbaren Verstelleinrichtung, die über mindestens einen steuerbaren Schalter mit Anschlüssen für ein elektrisches Versorgungsnetz verbindbar ist, wobei eine unter Umgehung des mindestens einen steuerbaren Schalters mit den Anschlüssen verbundene Hilfsspannungsquelle vorgesehen ist, welche Energie zum Betätigen des mindestens einen steuerbaren Schalters liefert, **dadurch gekennzeichnet, dass** die Hilfsspannungsquelle (10 bis 15) von einem Kondensator (10) und einem spannungsbegrenzenden Element (15) gebildet ist, die über eine Gleichrichterschaltung (13, 14) und über mindestens einen Widerstand (11, 12) mit den Anschlüssen (1) verbunden sind.

2. Verstellbares Möbelstück gemäß Anspruch 1, **dadurch gekennzeichnet, dass** der mindestens eine steuerbare Schalter ein Relais (3) ist.

3. Verstellbares Möbelstück gemäß einem der voranstehenden Ansprüche, **dadurch gekennzeichnet, dass** der Kondensator (10) über je einen Widerstand (11, 12) mit den Anschlüssen (1) verbunden ist.

4. Verstellbares Möbelstück gemäß einem der voranstehenden Ansprüche, **dadurch gekennzeichnet, dass** die Verstelleinrichtung (7) über einen Elektromotor (22) betätigbar ist.

5. Verstellbares Möbelstück gemäß einem der voranstehenden Ansprüche, **dadurch gekennzeichnet, dass** in Reihe zu den Widerständen (11, 12) je eine Gleichrichterdiode (13, 14) geschaltet ist.

6. Verstellbares Möbelstück gemäß einem der voranstehenden Ansprüche, **dadurch gekennzeichnet, dass** der über den mindestens einen Widerstand (11, 12) fließende Strom zum Erhalt der Ladung des Kondensators (10) auf eine vom Spannungsbegrenzenden Element (15) vorgegebene Spannung und zum Betrieb eines angeschlossenen Prozessors (16) ausreicht und dass bei einem über den Prozessor (16) empfangenen Einschaltbefehl die Energie zum Betätigen des mindestens steuerbaren Schalters (3) aus dem Kondensator (10) entnehmbar ist.

7. Verstellbares Möbelstück gemäß einem der voranstehenden Ansprüche, **dadurch gekennzeichnet, dass** eine Leistungsaufnahme der Schaltungsanordnung im Bereitschaftszustand weniger als 0,5 Watt, vorzugsweise weniger als 0,1 Watt beträgt.

8. Verstellbares Möbelstück gemäß einem der voranstehenden Ansprüche, **dadurch gekennzeichnet, dass** Mittel (19) zur Ableitung eines Stroms zum Halten des mindestens einen steuerbaren Schalters aus der durch den mindestens einen steuerbaren Schalter eingeschalteten Spannung nach dem Einschalten vorgesehen sind.

9. Verstellbares Möbelstück gemäß einem der voranstehenden Ansprüche, **dadurch gekennzeichnet, dass** die elektrisch betätigbare Verstelleinrichtung (7) über eine Einrichtung (5) zur galvanischen Trennung an den mindestens einen steuerbaren Schalter angeschlossen ist.

10. Verstellbares Möbelstück gemäß Anspruch 9, **dadurch gekennzeichnet, dass** die Einrichtung zur galvanischen Trennung ein Transformator (5) ist.

11. Verstellbares Möbelstück gemäß Anspruch 9, **dadurch gekennzeichnet, dass** die Einrichtung zur galvanischen Trennung ein Schaltwandler ist.

12. Verstellbares Möbelstück gemäß einem der Ansprüche 9 bis 11, **dadurch gekennzeichnet, dass** der Einrichtung (5) zur galvanischen Trennung eine weitere Gleichrichterschaltung (6) nachgeschaltet ist.

13. Verstellbares Möbelstück gemäß einem der voranstehenden Ansprüche, **dadurch gekennzeichnet, dass** es sich bei dem verstellbaren Möbelstück um einen höhenverstellbaren Tisch (20) handelt.

## Claims

1. Adjustable item of furniture with a circuit arrangement for switching on an electrically actuable adjustment device, which can be connected to connections for an electrical supply system via at least one controllable switch, wherein an auxiliary voltage source is provided, which is connected to the connections whilst bypassing the at least one controllable switch and which provides energy for actuating the at least one controllable switch, **characterized in that** the auxiliary voltage source (10 to 15) is formed by a capacitor (10) and a voltage-limiting element (15), which capacitor and voltage-limiting element are connected to the connections (1) via a rectifier circuit (13, 14) and via at least one resistor (11, 12).

2. Adjustable item of furniture according to Claim 1, **characterized in that** the at least one controllable switch is a relay (3).

3. Adjustable item of furniture according to one of the preceding claims, **characterized in that** the capacitor (10) is connected to the connections (1) via in each case one resistor (11, 12).

4. Adjustable item of furniture according to one of the preceding claims, **characterized in that** the adjustment device (7) is actuable via an electric motor (22).

5. Adjustable item of furniture according to one of the preceding claims, **characterized in that** in each case one rectifier diode (13, 14) is connected in series with the resistors (11, 12).

6. Adjustable item of furniture according to one of the preceding claims, **characterized in that** the current flowing across the at least one resistor (11, 12) is sufficient for achieving charging of the capacitor (10) to a voltage predetermined by the voltage-limiting element (15) and for operating a connected processor (16), and **in that**, in the event of a switch-on command received via the processor (16), the energy for actuating the at least one controllable switch (3) can be drawn from the capacitor (10).

7. Adjustable item of furniture according to one of the preceding claims, **characterized in that** a power consumption of the circuit arrangement in the standby state is less than 0.5 watt, preferably less than 0.1 watt.

8. Adjustable item of furniture according to one of the preceding claims, **characterized in that** means (19) for deriving a current for holding the at least one controllable switch from the voltage switched on by the at least one controllable switch after the switch-on process are provided.

9. Adjustable item of furniture according to one of the preceding claims, **characterized in that** the electrically actuable adjustment device (7) is connected to the at least one controllable switch via a device (5) for DC isolation.

10. Adjustable item of furniture according to Claim 9, **characterized in that** the device for DC isolation is a transformer (5).

11. Adjustable item of furniture according to Claim 9, **characterized in that** the device for DC isolation is a switching transducer.

12. Adjustable item of furniture according to one of Claims 9 to 11, **characterized in that** a further rectifier circuit (6) is connected downstream of the device (5) for DC isolation.

13. Adjustable item of furniture according to one of the preceding claims, **characterized in that** the adjustable item of furniture is a height-adjustable table (20).

## Revendications

1. Pièce de meuble réglable dotée d'un agencement de circuits pour commuter un dispositif de réglage actionnable électriquement pouvant être relié à des branchements au réseau d'alimentation électrique par le biais d'au moins un contacteur commandable, une source de tension auxiliaire reliée aux branchements en contournant l'au moins un contacteur commandable étant prévue, délivrant de l'énergie servant à actionner l'au moins un contacteur commandable, **caractérisée en ce que** la source de tension auxiliaire (10 à 15) est constituée d'un condensateur (10) et d'un élément de limitation de tension (15) reliés aux branchements (1) par le biais d'un circuit de redressement (13, 14) et d'au moins une résistance (11, 12).

2. Pièce de meuble réglable selon la revendication 1, **caractérisée en ce que** l'au moins un contacteur commandable est un relais (3).

3. Pièce de meuble réglable selon l'une quelconque des revendications précédentes, **caractérisée en ce que** le condensateur (10) est relié aux branchements (1) par le biais respectivement d'une résistance (11, 12).

4. Pièce de meuble réglable selon l'une quelconque des revendications précédentes, **caractérisée en ce que** le dispositif de réglage (7) peut être actionné par le biais d'un moteur électrique (22).

5. Pièce de meuble réglable selon l'une quelconque des revendications précédentes, **caractérisée en ce qu'**une diode de redressement (13, 14) est respectivement connectée en série avec les résistances (11, 12).

6. Pièce de meuble réglable selon l'une quelconque des revendications précédentes, **caractérisée en ce que** le courant circulant au travers d'au moins une résistance (11, 12) redresse une tension prédéfinie par l'élément de limitation de tension (15) pour obtenir la charge du condensateur (10) et que l'énergie servant à actionner l'au moins un contacteur commandable (3) peut être extraite du condensateur (10) pour faire fonctionner un processeur (16) raccordé à réception d'un ordre de commutation par le processeur (16).

7. Pièce de meuble réglable selon l'une quelconque des revendications précédentes, **caractérisée en ce que** la puissance consommée par l'agencement de circuits à l'état de veille est inférieure à 0,5 Watt, de préférence inférieure à 0,1 Watt.

8. Pièce de meuble réglable selon l'une quelconque des revendications précédentes, **caractérisée en ce que** des moyens (19) de dérivation de courant sont prévus pour maintenir l'au moins un contacteur commandable hors de la tension commutée par l'au moins un contacteur commandable après connexion.

9. Pièce de meuble réglable selon l'une quelconque des revendications précédentes, **caractérisée en ce que** le dispositif de réglage actionnable électriquement (7) est raccordé à l'au moins un contacteur commandable par le biais d'un dispositif (5) de séparation galvanique.

10. Pièce de meuble réglable selon la revendication 9, **caractérisée en ce que** le dispositif de séparation galvanique est un transformateur (5).

11. Pièce de meuble réglable selon la revendication 9, **caractérisée en ce que** le dispositif de séparation galvanique est un convertisseur continu-continu.

12. Pièce de meuble réglable selon l'une quelconque des revendications 9 à 11, **caractérisée en ce qu'**un circuit de redressement (6) supplémentaire est connecté en aval du dispositif (5) de séparation galvanique.

13. Pièce de meuble réglable selon l'une quelconque des revendications précédentes, **caractérisée en ce que** la pièce de meuble réglable est une table réglable en hauteur (20).
